(19) Europäisches Patentamt

European Patent Office

Office européen des brevets

(11) **EP 0 683 002 B1**

## (12) FASCICULE DE BREVET EUROPEEN

(45) Date de publication et mention
de la délivrance du brevet:
**13.01.1999 Bulletin 1999/02**

(51) Int. Cl.<sup>6</sup>: **B23C 5/10**, **B24B 3/06**

(21) Numéro de dépôt: **95401063.3**

(22) Date de dépôt: **09.05.1995**

(54) **Fraise à copier amovible**

Fräser

Milling cutter

(84) Etats contractants désignés:
**AT CH DE GB IT LI**

(30) Priorité: **19.05.1994 FR 9406104**

(43) Date de publication de la demande:
**22.11.1995 Bulletin 1995/47**

(73) Titulaire:
**SOCIETE NATIONALE D'ETUDE ET DE
CONSTRUCTION DE MOTEURS D'AVIATION,
"S.N.E.C.M.A."**
**75015 Paris (FR)**

(72) Inventeur: **Martin, Philippe R.**
**F-27940 Aubevoye (FR)**

(74) Mandataire:
**Thévenet, Jean-Bruno et al
Cabinet Beau de Loménie
158, rue de l'Université
75340 Paris Cédex 07 (FR)**

(56) Documents cités:
**EP-A- 0 072 887          DE-A- 2 647 360**

• **IRON AGE, vol.190, no.2, 12 Juillet 1962 page
154 'End Mill Announced'**

## Description

### DOMAINE DE LA TECHNIQUE

La présente invention concerne une fraise à copier à extrémité sphérique (fraise boule) selon le préambule de la revendication 1 (voir par exemple DE-A 26 47 360)) plus spécialement pour série longue (usinage de grandes profondeurs) destinée à la reproduction sur des machines-outils à commande numérique de pièces de formes complexes et d'accès délicat, comme des rouets de turbopompes dans les domaines de l'aéronautique ou de l'espace par exemple.

### ART ANTERIEUR

La demande de brevet FR 2 433 998 montre un exemple de fraise-boule d'utilisation courante comportant une plaquette à deux faces de coupe montée dans une chape du porte outil et maintenue dans celle-ci par une vis de serrage.

Les demandes de brevet FR 2 624 416 et FR 2 548 061 montrent des fraises à reproduire avec respectivement trois lames disposées dans le plan axial de la fraise et quatre plaquettes constituées de secteurs de couronne circulaire.

La demande FR 2 541 155 montre une fraise à tête de travail hémisphérique qui comporte deux plaquettes en forme de parallélogramme et possédant une surface supérieure de coupe convexe.

Dans de tels outils à plaquettes, la coupe de la matière est effectuée successivement par les lèvres des différentes plaquettes qui sont amenées à enlever une certaine quantité de cette matière à chaque passe. Il en résulte la nécessité d'exercer au niveau de chacune de ces lèvres une force déterminée qui est de nature à faire fléchir le porte-outil voire à le rompre lorsque les vibrations dont il est alors le siège deviennent trop importantes. En outre, la géométrie des plaquettes ne permet pas l'établissement d'angles habituellement favorables à la coupe. Par ailleurs, il peut être noté que dans les fraises munies de vis de serrage, comme la fraise du document FR 2 433 998 par exemple, il apparaît un phénomène de matage qui entraîne irrémédiablement la destruction du porte-outil.

### DESCRIPTION DE L'INVENTION

La présente invention se propose de remédier aux inconvénients précités avec une fraise à copier dont la durée de vie ne soit pas limitée par l'obligation de taille des plaquettes. Un but de l'invention est de réaliser une fraise qui soit rigide et robuste et permette ainsi des usinages intensifs avec des enlèvements de surépaisseurs de matière importantes. Un autre but de l'invention est de permettre ces usinages avec des vitesses de coupe et d'avance élevées. Encore un autre but est d'obtenir par une fabrication simplifiée une fraise à copier d'une grande fiabilité.

Ces buts sont atteints par une fraise à copier munie d'un corps cylindrique ou conique ayant une extrémité sphérique constituant la partie active de la frasie, cette extrémité comportant plusieurs cannelures inclinées d'un angle déterminé $\theta$ par rapport à l'axe longitudinal de la fraise et pratiquées suivant un arc de cercle à une distance déterminée x du plan médian P de la fraise, une face interne et une face externe de chacune de ces cannelures constituant après usinage respectivement une face de coupe et des faces de dépouille de chaque dent de cette fraise. Les faces de dépouille comportent une face de première dépouille et une face de contredépouille présentant au moins une première facette.

Par cet usinage direct de l'extrémité sphérique qui ne présente plus aucun élément rapporté, il est possible d'obtenir avec une parfaite répétitivité une fraise ayant un grand nombre de dents et présentant des angles particulièrement favorables à la coupe.

La face de coupe comporte un angle de coupe $\gamma$ donné par l'équation suivante:

$$\gamma = \mathrm{Arcsin}[x\,\mathrm{tg}\theta\,/\sqrt{x(2R\text{-}x)}]$$

R étant le rayon de la fraise.

Ainsi en jouant sur les paramètres $\theta$ et x, il est possible sans difficulté de choisir l'angle de coupe $\gamma$ et l'angle de dépouille $\alpha$ qui convient le mieux au couple formé par l'outil d'affûtage et le matériau de la fraise.

De préférence, les cannelures s'étendent sur un arc compris entre 90 et 120° et les dents qui sont toutes convergentes vers le centre sont au nombre de six à douze. Lorsque la fraise comporte un nombre impair de dents, seule l'une d'entre elles s'étend jusqu'à l'axe longitudinal de rotation de la fraise pour permettre d'assurer un usinage en bout convenable.

Afin de permettre l'utilisation de cette fraise tant pour les séries longues (usinage de grandes profondeurs) que pour les séries courtes mais aussi de permettre un meilleur choix des matériaux constituant la fraise (qualité de coupe pour la tête et résistance à la flexion pour la queue), son extrémité sphérique comporte une queue conique destinée à coopérer avec une partie conique femelle correspondante du corps cylindrique, un dispositif d'arrêt traversant à la fois le corps et la queue pour interdire toute rotation entre ces deux éléments. Avantageusement, ce dispositif d'arrêt est constitué par une goupille fendue élastique.

La présente invention se rapporte également à un procédé de fabrication de la partie active d'une fraise à copier à extrémité sphérique telle que décrite ci-dessus, l'axe longitudinal A de la fraise étant incliné d'un angle $\theta$ déterminé par rapport à l'horizontale, ce procédé comportant les phases d'usinage suivantes exécutées à partir d'une pièce formée d'une tête sphérique et d'une queue conique:

a) taillage d'une cannelure d'une profondeur déterminée sur une portion déterminée de la tête sphérique par rotation de la fraise autour d'un axe perpendiculaire C au plan horizontal passant près du centre de cette tête sphérique,

b) rotation de la fraise d'un angle prédéterminé dépendant du nombre de dents de la fraise à réaliser, autour de son axe longitudinal A,

c) répétition des phases a) et b) pour toutes les dents,

d) affûtage de la face de coupe sur une profondeur déterminée d'une face interne de la cannelure par rotation de la fraise autour de l'axe C, l'angle de coupe $\gamma$ variant avec une distance x prédéterminée existant entre le plan médian P de la fraise passant par son centre et le plan de l'outil d'affûtage,

e) rotation de la fraise d'un angle déterminé, dépendant du nombre de dents de la fraise à réaliser, autour de son axe longitudinal A,

f) répétition des phases d) et e) pour toutes les dents,

g) affûtage d'une première facette d'une face de contredépouille par rotation de la fraise autour de l'axe C,

h) rotation de la fraise d'un angle déterminé, dépendant du nombre de dents de la fraise à réaliser, autour de son axe longitudinal A,

i) répétition des phases g) et h) pour toutes les dents,

j) affûtage d'une face de dépouille par rotation de la fraise autour de l'axe C,

k) rotation de la fraise d'un angle déterminé, dépendant du nombre de dents de la fraise à réaliser, autour de son axe longitudinal A,

l) répétition des phases j) et k) pour toutes les dents.

Lorsque le nombre de dents est de préférence inférieur à huit, ce procédé de fabrication comporte des phases supplémentaires de m) rotation de la fraise autour de son axe longitudinal A et de n) affûtage d'une seconde facette de la face de contredépouille, ces phases étant mises en oeuvre entre les phases g) et h) précédentes.

Plus précisément, les phases d'affûtage d), g), j) et n) comportent une étape de plongée de l'outil d'affûtage dans la fraise à usiner, l'étape d'usinage proprement dit par rotation de la fraise et une étape de retrait et de retour de l'outil d'affûtage dans sa position de départ.

## BREVE DESCRIPTION DES DESSINS

D'autres caractéristiques et avantages de la présente invention ressortiront mieux de la description suivante, faite à titre indicatif et non limitatif, en regard des dessins annexés, sur lesquels:

- la figure 1 est un schéma de principe montrant les différents axes de déplacement de la machine-outil nécessaire à la fabrication de la fraise à copier selon l'invention,

- la figure 2 montre une première phase de fabrication de la fraise selon l'invention,

- la figure 3 montre une deuxième phase de fabrication de la fraise selon l'invention,

- la figure 4a est un schéma explicatif de la réalisation de l'angle de coupe de la fraise selon l'invention,

- les figures 4b et 4c sont des vues selon respectivement les sections IVb-IVc de la figure 4a,

- la figure 5 montre une troisième phase (réalisation de l'angle de coupe) de fabrication de la fraise selon l'invention,

- la figure 6 montre une dernière phase de fabrication de la fraise selon l'invention,

- les figures 7 et 8 montrent respectivement pour une fraise à 6 dents et une fraise à 12 dents une section de cette fraise selon un plan perpendiculaire à son axe de rotation,

- la figure 9 est une vue en bout d'une fraise à 9 dents selon l'invention,

- la figure 10 est une coupe présentant le montage de l'outil sur le porte outil, et

- les figures 11-1 et 11-2 montrent un organigramme explicitant le procédé de fabrication de la fraise à copier selon l'invention.

## DESCRIPTION DE MODES PARTICULIERS DE REALISATION

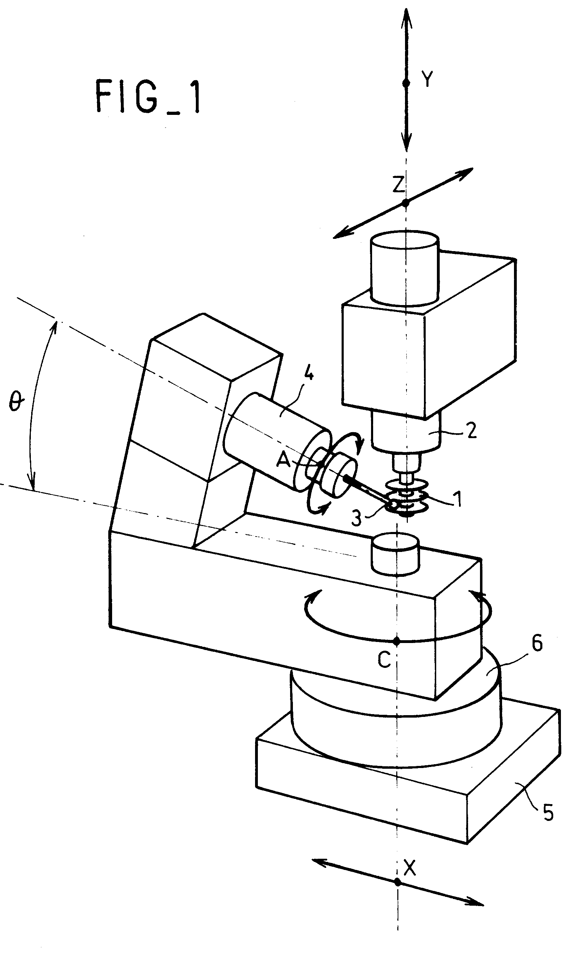

Il est fait référence à la figure 1 qui montre de façon très schématique une machine-outil à commande numérique à cinq axes destinée à la réalisation d'une fraise à copier selon l'invention. L'outil d'affûtage 1 constitué de trois meules 10, 12, 14 superposées est monté sur un porte-meules 2 pouvant se déplacer selon un axe vertical Y et un axe horizontal Z. L'outil à tailler 3 (la fraise-boule) est monté sur un porte-outil 4 assurant une rotation de l'outil autour de son axe longitudinal A et pouvant se déplacer selon un axe X de translation d'une table (chariot 5) de la machine-outil. Ces quatre axes permettent classiquement le taillage d'outils cylindriques à denture droite ou hélicoïdale, le déplacement selon l'axe Y permettant notamment de réaliser des affûtages en bout. Un axe de rotation complémentaire autour d'un axe C perpendiculaire à l'horizontale et passant par le centre (ou sensiblement près du centre) de la fraise peut aussi être utilisé grâce à un plateau rotatif 6 fixé sur le chariot 5. Comme il est montré sur cette figure 1, le porte-outil 4 est incliné par rapport au plan horizontal de la table d'un angle $\theta$ afin de permettre notamment un usinage d'une fraise comportant un nombre élevé de dents sans que l'outil d'affûtage 1 ne vienne heurter la queue de cet outil.

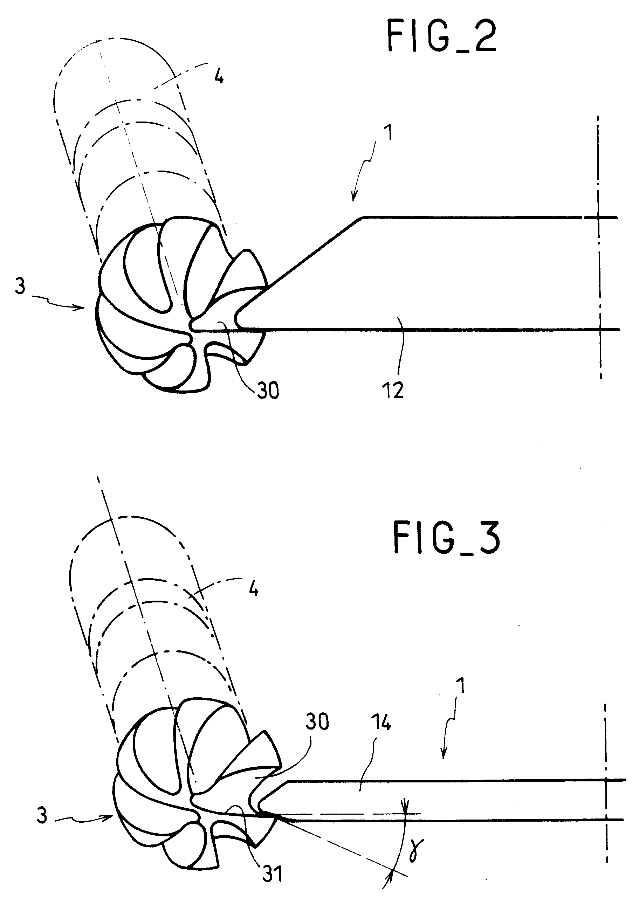

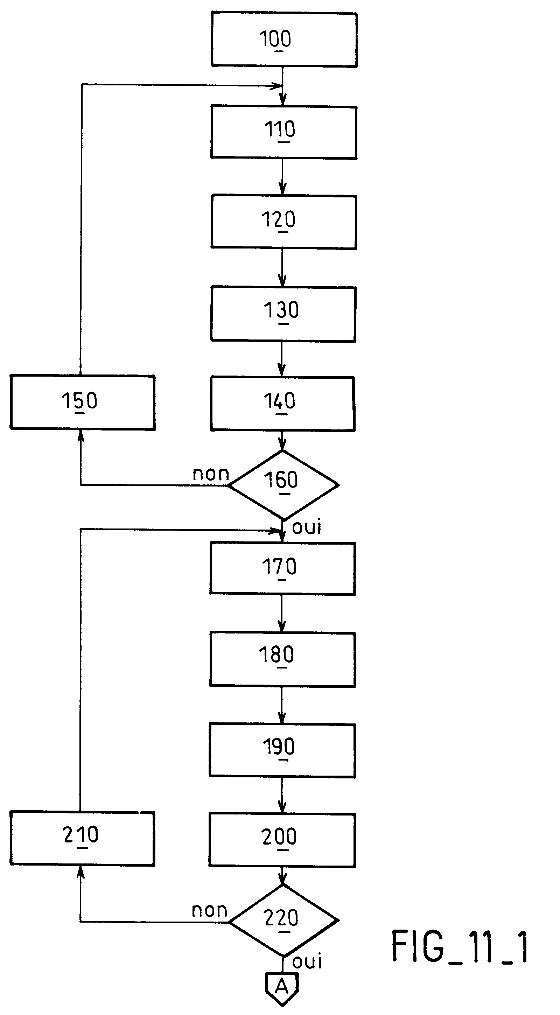

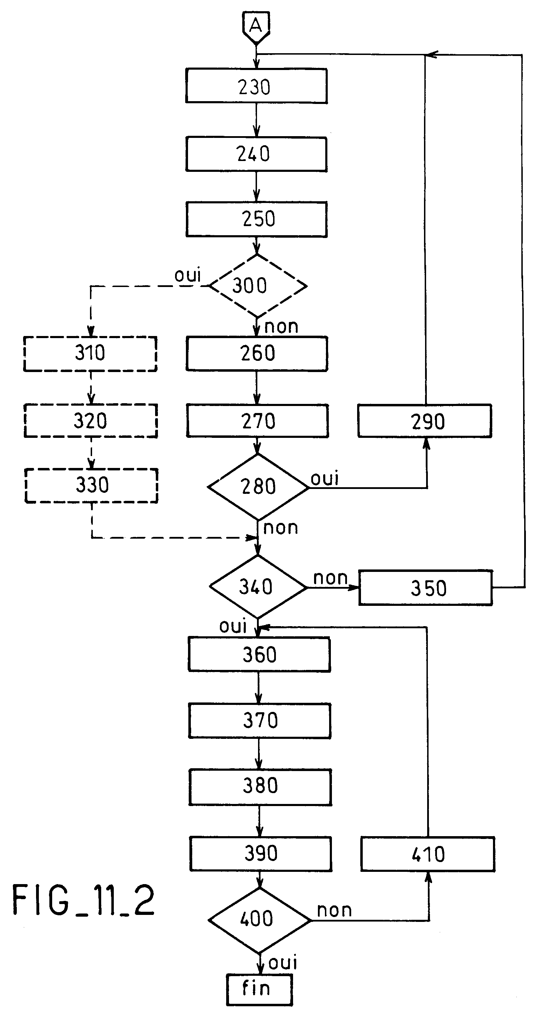

Les figures 2 et 11-1 illustrent une première phase de fabrication de la fraise à copier selon l'invention consistant dans le perçage de cannelures ou goujures 30.

Après initialisation 100 des différents axes afin de permettre une approche de l'outil d'affûtage 1 près de la fraise à usiner 3, il est procédé de cette position de départ à une première étape 110 de plongée de la meule centrale 12 dans cette fraise 3 selon l'axe Z. Dans une deuxième étape 120, cette goujure est réalisée sur une portion de la fraise, avantageusement de 90 à 120°, par rotation de la fraise autour de l'axe C. Une troisième étape 130 permet le retrait de l'outil 1 selon son axe Z et à une quatrième étape 140, la fraise est retournée à sa position de départ initiale par une nouvelle rotation autour de l'axe C identique à la précédente mais en sens opposé. Enfin, à une étape 150, il est procédé à une rotation de la fraise autour de son axe A afin de permettre, par retour aux étapes 110 à 140, le perçage d'une autre goujure correspondant à une autre dent de la fraise, ces étapes étant réalisées en un nombre de fois équivalent au nombre de dents devant être usinées selon le résultat d'un test réalisé à l'étape 160.

Les figures 3 et 11-1 illustrent une deuxième phase de fabrication consistant dans la reprise d'un angle de coupe de la fraise par la meule inférieure 14 (cette reprise pouvant n'être effectuée que sur une profondeur déterminée de la goujure). A une première étape 170, la meule est introduite dans la première goujure 30, puis à une deuxième étape 180, cet angle est réalisé sur une face interne 31 de l'ensemble de la goujure par rotation du porte-outil 3 selon l'axe C. A l'étape 190, il est procédé au retrait de l'outil 1 selon l'axe Z puis la fraise est ramenée dans sa position de départ par une rotation inverse selon ce même axe C lors d'une étape 200. Après une rotation de la fraise selon l'axe A à l'étape 210, les étapes précédentes 160 à 190 sont ensuite répétées pour les autres dents (le nombre de dents réalisées est testé à l'étape 220).

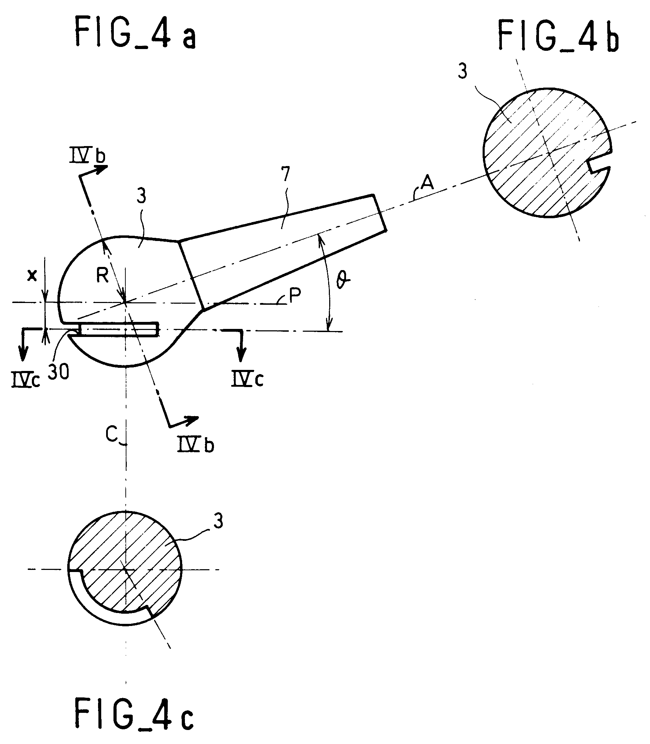

L'intérêt de l'inclinaison du porte-outil 4 de la fraise 3 d'un angle $\theta$ peut être mieux apprécié au regard des figures 4a à 4c. Il peut ainsi être observé qu'avec cette inclinaison il est possible de réaliser les goujures et les différentes facettes de la fraise sans craindre que les meules de l'outil d'affûtage ne viennent entamer la queue cône morse 7 de la fraise. En outre, cette inclinaison permet de choisir des angles de coupe et de dépouille les plus appropriés à la matière travaillée. Ainsi, il peut être démontré très simplement que, dans le cas où le plan de coupe de la meule passe par le centre de la fraise (plan médian P), si l'axe de la meule tourne d'un angle $\varphi$ dans le sens trigonométrique et que la fraise est usinée avec l'inclinaison $\theta$ par rapport à l'horizontale, l'angle de coupe $\gamma$ de la dent ramené sur la fraise sera alors de $\gamma = \varphi + \text{Arcsin}\,(\text{tg}\theta)$. De même, si l'axe de la meule tourne d'un angle $\varphi$ dans le sens contraire du sens trigonométrique et que la fraise est usinée avec l'inclinaison $\theta$ par rapport à l'horizontale, l'angle de coupe $\gamma$ de la dent ramené sur la fraise sera alors de $\gamma = \text{Arcsin}\,(\text{tg}\theta) - \varphi$. Plus généralement, lorsque le plan de la meule est distant de x du plan médian P de la fraise (de rayon R), il peut également être démontré que l'angle de coupe $\gamma$ est alors donné par l'équation suivante:

$$\gamma = \text{Arcsin} \left[ x\,\text{tg}\theta\, / \sqrt{x(2R-x)} \right] \pm \varphi.$$

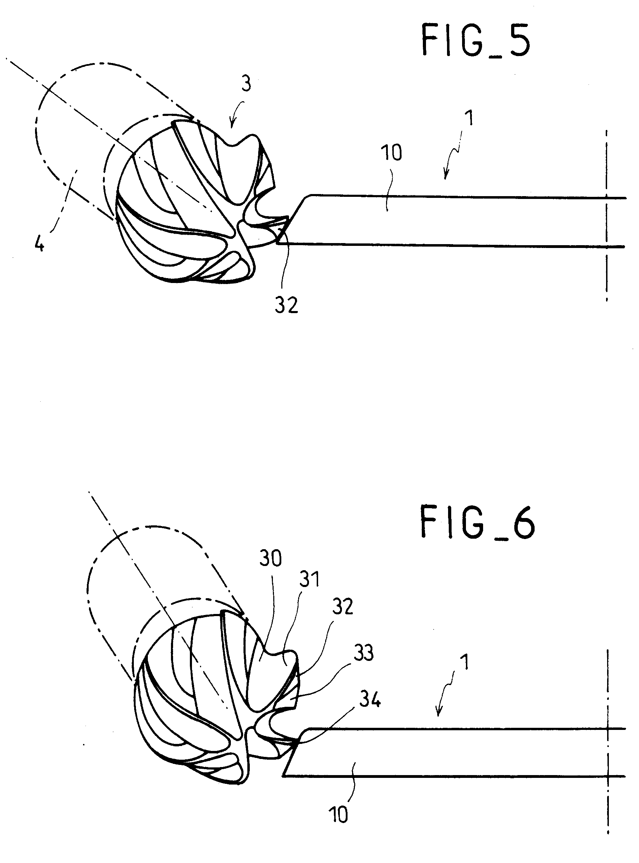

Les figures 5 et 11-2 illustrent une troisième phase de fabrication consistant dans le taillage des facettes d'une contredépouille par la meule supérieure 10. A une première étape 230, il est procédé à une première rotation du porte-outil 4 selon l'axe C pour permettre lors d'une étape 240 d'introduire la meule jusqu'à l'extrémité de la première dent, puis à une deuxième étape 250, une première facette 32 de cette contredépouille est réalisée sur l'ensemble de la dent par une nouvelle rotation du porte-outil 4 selon l'axe C (cette rotation étant réalisée dans un sens opposé à la précédente rotation mais identique à celui des étapes 120 et 180). A l'étape 260, l'outil d'affûtage est retiré selon son axe Z et la fraise est ramenée dans sa position initiale par une rotation inverse selon le même axe C lors d'une étape 270. Selon le nombre de dents à réaliser (test de l'étape 280) (avantageusement en deçà de 8 dents), il peut être procédé au taillage d'une seconde facette 33 de la contredépouille en reprenant successivement les étapes 230 et 270, ces étapes étant précédées d'une étape 290 de rotation de la fraise selon son axe A.

Dans une variante de mise en oeuvre de ce procédé de fabrication, illustrée en traits pointillés sur la figure 11-2, le taillage de cette seconde facette peut être fait directement lors d'une étape 320 de retour de la fraise, cette étape suivant une étape 310 de rotation préalable de cette fraise selon l'axe A, les étapes 260 à 280 n'étant alors pas réalisées du fait de la présence en une étape 300 succédant à l'étape 250 d'un test sur le nombre de dents à réaliser. Il est ensuite fait retour à la position de départ par recul dans une étape 330 de l'outil d'affûtage selon l'axe Z.

Afin de pouvoir procéder à l'usinage des autres dents un test est ensuite réalisé à l'étape 340 pour permettre de reprendre les étapes précédentes de 230 à éventuellement 330 après une rotation de la fraise selon l'axe A à l'étape 350.

Les figures 6 et 11-2 illustrent la dernière phase de fabrication (identique dans le principe aux première et deuxième phases) de la fraise à copier selon l'invention et consistant à usiner la première dépouille par l'intermédiaire de la meule supérieure 10. A une première étape 360, la meule est introduite dans la première goujure 30, puis à une deuxième étape 370, la première dépouille 34 est réalisée sur l'ensemble de la dent par rotation du porte-outil 4 selon l'axe C. A l'étape 380, il est procédé au retrait de l'outil 1 selon l'axe Z puis la fraise est ramenée dans sa position de départ par une rotation inverse selon ce même axe C lors d'une étape 390. Les étapes précédentes 360 à 390 sont ensuite répétées pour les autres dents, après rotation à l'étape 410 de la fraise selon l'axe A, selon le résultat d'un test portant sur le nombre de dents réalisé à l'étape 400.

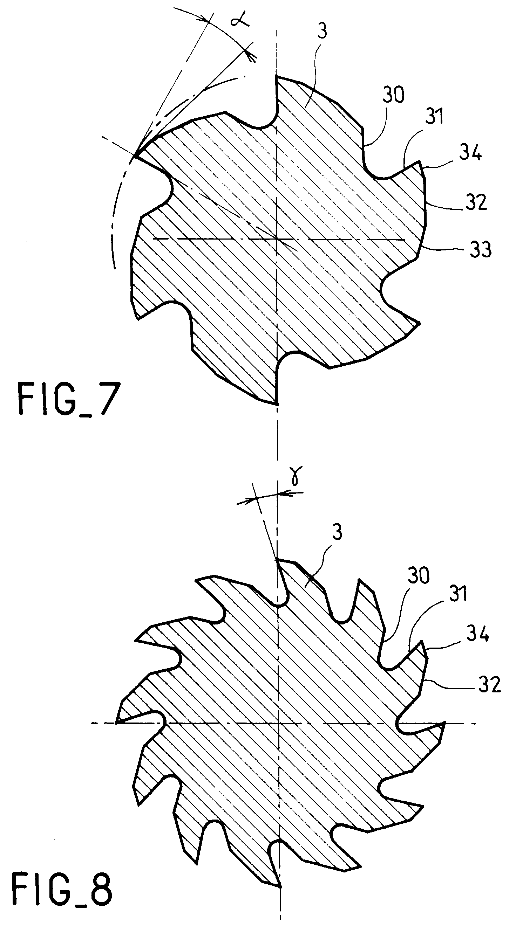

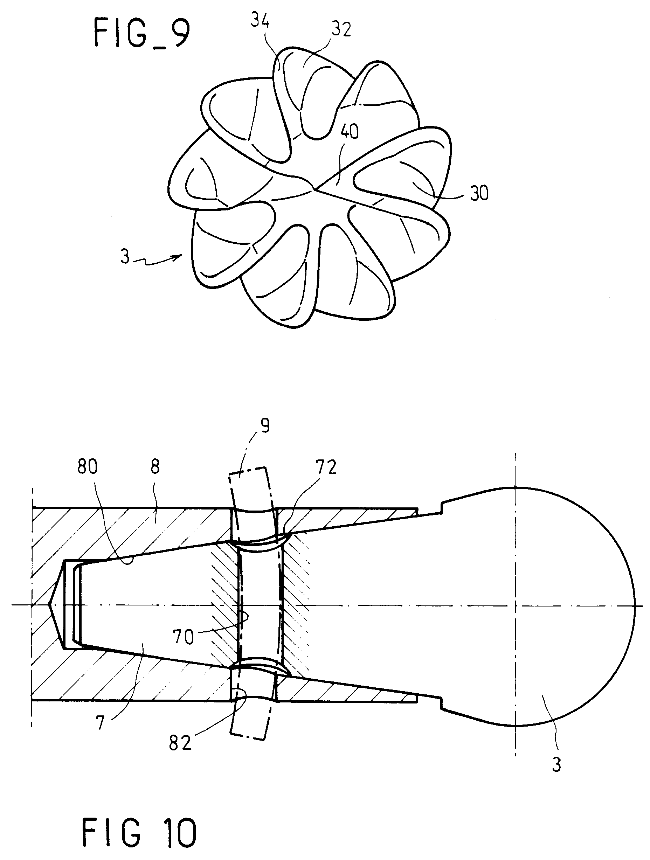

Des sections, réalisées selon un plan perpendiculaire à l'axe longitudinal de la fraise, de fraises à 6 et 12 dents obtenues selon le procédé de fabrication explicité précédemment sont montrées aux figures 7 et 8. On retrouve, outre les goujures 30, les différentes faces de la fraise avec sa face de coupe 31 présentant dans le cas de la figure 7 un angle de coupe γ nul (cet angle est positif dans le cas de la figure 8), sa première dépouille 34 définie par son angle de dépouille α et sa ou ses facettes 32, 33 de contre dépouille. La figure 9 est une vue en bout d'une fraise à 9 dents qui montre une dent centrale 40 qui s'étend jusqu'à l'axe longitudinal de rotation de la fraise. Bien évidemment, il peut être observé, comme précédemment, les goujures 30, la première dépouille 34 et la contre dépouille 32.

Il est important de noter que si l'on souhaite réaliser une fraise à copier pour série longue, il est a priori nécessaire d'opter pour un matériau ayant des qualités de coupe comme le carbure de tungstène par exemple, ces types de fraise étant réalisées sous une forme monobloc intégrant à la fois la partie active de l'outil, l'extrémité boule de la fraise, et sa partie support, la queue de fraise. Avec la présente invention, il est proposé (voir figure 10) de réaliser ce type de fraise à copier en deux parties distinctes, une partie active comportant la fraise 3 proprement dite et sa queue cône morse 7 et une partie support comprenant une tige 8 munie d'un cône femelle 80 destiné à coopérer à force avec le cône morse précité. Ainsi seule la partie active doit être en un matériau présentant les qualités de coupe exigées pour l'usinage, carbure de tungstène ou acier rapide supérieur (HSS) notamment, la partie support pouvant être constituée par un acier ou un carbure de type courant présentant simplement de bonnes caractéristiques de résistance à la flexion. En effet, l'expérience montre que l'acier rapide supérieur (par exemple du type M42) permet un copeau plus petit donc un moindre effort à la coupe alors que, par contre, le carbure résiste bien à la flexion. La liaison entre les cônes 7 et 80 est assurée par un montage à force sous une précontrainte déterminée (par exemple 1 tonne) mais suffisamment faible pour rester dans une limite élastique, la possible rotation entre la fraise 3 et la tige 8 lors des efforts de coupe étant évitée par l'adjonction d'une goupille 9 traversant à la fois cette tige au niveau d'un orifice 82 et la queue de la fraise au niveau d'un orifice 70, les axes de ces orifices 82 et 70 étant décalés d'une distance déterminée fonction des caractéristiques géométriques et mécaniques de la goupille choisie. De préférence, la goupille est constituée par une goupille fendue élastique. L'angle des cônes est déterminé de telle sorte qu'il assure un compromis entre coincement et positionnement. Avantageusement, les arêtes vives 72 de l'orifice 70 de la queue de fraise sont éliminées (ébavurage) pour faciliter la pénétration de la goupille et empêcher la formation d'un copeau de nature à usiner la goupille.

Ce montage en deux parties, outre qu'il permet de diminuer globalement le coût de l'outil par la limitation de l'utilisation d'aciers spéciaux à la seule partie active de l'outil, permet de changer l'outil plusieurs fois tout en ayant recours à la même tige support.

Il doit être noté que ce montage est aussi approprié pour l'usinage de la fraise elle-même et des essais ont montrés qu'il est ainsi possible à partir d'une même tige d'usiner ces fraises avec une répétibilité des dimensions de la fraise garantie. L'usinage de la fraise est réalisé sur un support court où la fraise est bloquée sur un appui conique grâce à une "baïonnette" hélicoïdale et une goupille traversante. On peut, avec ce système, tailler et affûter une quantité quasi illimitée de fraises. Le temps de montage réduit et l'absence de réglages que procure ce système favorisent la production en grande série.

## Revendications

1.  Fraise à copier munie d'un corps cylindrique ou conique ayant une extrémité sphérique, cette extrémité sphérique constituant la partie active (3) de la fraise comporte plusieurs cannelures (30) inclinées d'un angle déterminé (θ) par rapport à l'axe longitudinal de la fraise, une face interne et une face externe de chacune de ces cannelures constituant après usinage respectivement une face de coupe (31) et des faces de dépouille (32, 33, 34) de chaque dent de cette fraise caractérisée en ce que les cannelures sont pratiquées suivant un arc de cercle à une distance déterminée (x) du plan médian (P) de la fraise.

2.  Fraise à copier selon la revendication 1, caractérisée en ce que lesdites faces de dépouille comportent une face de première dépouille (34) et une face de contredépouille présentant au moins une première facette (32).

3.  Fraise à copier selon la revendication 1 ou la revendication 2, caractérisée en ce ladite face de coupe comporte un angle de coupe γ donné par l'équation suivante:

    $$\gamma = \text{Arcsin}[x\ \text{tg}\theta/\sqrt{x(2R\text{-}x)}]$$

    R étant le rayon de la fraise.

4.  Fraise à copier selon la revendication 1, caractérisée en ce que lesdites cannelures s'étendent sur un arc compris entre 90 et 120°.

5.  Fraise à copier selon la revendication 1, caractérisée en ce qu'elle comporte de six à douze dents toutes convergentes vers son centre.

6.  Fraise à copier selon la revendication 5, caractérisée en ce que, lorsqu'elle comporte un nombre impair de dents, seule l'une d'entre elles (40) s'étend jusqu'à l'axe longitudinal de rotation de la fraise.

7. Fraise à copier selon la revendication 1, caractérisée en ce que ladite extrémité sphérique comporte une queue conique (7) destinée à coopérer avec une partie conique femelle correspondante (80) du corps cylindrique, un dispositif d'arrêt (9) traversant à la fois le corps et la queue pour interdire toute rotation entre ces deux éléments.

8. Fraise à copier selon la revendication 7, caractérisée en ce que ledit dispositif d'arrêt est constitué par une goupille fendue élastique.

9. Procédé de fabrication d'une fraise à copier selon l'une quelconque des revendications 1 à 6, caractérisé par le fait que, l'axe longitudinal (A) de la fraise étant incliné d'un angle (θ) déterminé par rapport à l'horizontale, il comporte les phases d'usinage suivantes exécutées à partir d'une pièce formée d'une tête sphérique (3) et d'une queue conique (7):

a) taillage d'une cannelure (30) d'une profondeur déterminée sur une portion déterminée de la tête sphérique par rotation de la fraise autour d'un axe perpendiculaire (C) au plan horizontal passant près du centre de cette tête sphérique,
b) rotation de la fraise d'un angle prédéterminé dépendant du nombre de dents de la fraise à réaliser, autour de son axe longitudinal (A),
c) répétition des phases a) et b) pour toutes les dents,
d) affûtage de la face de coupe sur une profondeur déterminée d'une face interne (31) de la cannelure par rotation de la fraise autour de l'axe (C), l'angle de coupe (γ) variant avec une distance (x) prédéterminée existant entre le plan médian (P) de la fraise passant par son centre et le plan de l'outil d'affûtage (1),
e) rotation de la fraise d'un angle déterminé, dépendant du nombre de dents de la fraise à réaliser, autour de son axe longitudinal (A)
f) répétition des phases d) et e) pour toutes les dents,
g) affûtage d'une première facette d'une face de contredépouille (32) par rotation de la fraise autour de l'axe (C),
h) rotation de la fraise d'un angle déterminé, dépendant du nombre de dents de la fraise à réaliser, autour de son axe longitudinal (A),
i) répétition des phases g) et h) pour toutes les dents,
j) affûtage d'une face de dépouille (34) par rotation de la fraise autour de l'axe (C),

k) rotation de la fraise d'un angle déterminé, dépendant du nombre de dents de la fraise à réaliser, autour de son axe longitudinal (A),
l) répétition des phases j) et k) pour toutes les dents.

10. Procédé de fabrication de la partie active d'une fraise à copier à extrémité sphérique selon la revendication 9, caractérisé en ce qu'il comporte des phases supplémentaires de m) rotation de la fraise autour de son axe longitudinal (A) et de n) affûtage d'une seconde facette (33) de la face de contredépouille, ces phases étant mises en oeuvre entre les phases g) et h) précédentes.

11. Procédé de fabrication de la partie active d'une fraise à copier à extrémité sphérique selon la revendication 9 ou la revendication 10, caractérisé en ce que les phases d'affûtage d), g), j) et n) comportent une étape de plongée de l'outil d'affûtage dans la fraise à usiner, l'étape d'usinage proprement dit par rotation de la fraise et une étape de retrait et de retour de l'outil d'affûtage dans sa position de départ.

**Claims**

1. A copying cutter provided with a cylindrical or conical body having a spherical end, said spherical end constituting the active portion (3) of the cutter includes a plurality of flutes (30) inclined at a determined angle (θ) relative to the longitudinal axis of the cutter, an inside face and an outside face of each of the flutes constituting, after machining, respectively a cutting face (31) and clearance faces (32, 33, 34) for each tooth of said cutter being characterized in that the flutes are formed along circular arcs at a determined distance ($\underline{x}$) from the midplane (P) of the cutter.

2. A copying cutter according to claim 1, characterized in that said clearance faces comprise a first clearance face (34) and an additional clearance face presenting at least a first facet (32).

3. A copying cutter according to claim 1 or claim 2, characterized in that said cutting face has a cutting angle γ given by the following equation:

$$\gamma = \text{Arcsin}[x.\text{tg}\theta/\sqrt{x(2R\text{-}x)}]$$

where R is the radius of the cutter.

4. A copying cutter according to claim 1, characterized in that said flutes extend over an arc lying in the range 90° to 120°.

5. A copying cutter according to claim 1, characterized

11     EP 0 683 002 B1     12

6. A copying cutter according to claim 5, characterized in that, when it has an odd number of teeth, only one of the teeth (40) extends all the way to the longitudinal axis of rotation of the cutter.

7. A copying cutter according to claim 1, characterized in that said spherical end includes a conical shank (7) for co-operating with a corresponding female conical portion (80) of the cylindrical body, a fastener device (9) passing through both the body and the shank to prevent any rotation between them.

8. A copying cutter according to claim 7, characterized in that said fastener device is constituted by a resilient split pin.

9. A method of manufacturing a copying cutter according to any one of claims 1 to 6, the method being characterized by the fact that with the longitudinal axis (A) of the cutter being inclined at a determined angle ($\theta$) relative to the horizontal, it comprises the following machining stages performed on a part that is formed with a spherical head (3) and a conical shank (7):

a) a flute (30) of determined depth is milled over a determined portion of the spherical head by rotating the cutter about an axis (C) perpendicular to the horizontal plane passing near the center of said spherical head;
b) the cutter is rotated through a predetermined angle about its own longitudinal axis (A), depending on the number of teeth to be made in the cutter;
c) stages a) and b) are repeated for all of the teeth;
d) the cutting face of a flute is ground over a determined depth of an internal face (31) thereof by rotating the cutter about the axis (C), with the cutting angle ($\gamma$) varying with a predetermined distance ($\underline{x}$) that exists between the plane of the grinding tool (1) and the midplane (P) of the cutter, including the center thereof;
e) the cutter is rotated through a determined angle about its longitudinal axis (A), depending on the number of teeth to be made in the cutter;
f) stages d) and e) are repeated for all of the teeth;
g) a first facet of an additional clearance face (32) is ground by rotating the cutter about the axis (C);
h) the cutter is rotated through a determined angle about its own longitudinal axis (A) depending on the number of cutter teeth to be made;

i) stages g) and h) are repeated for all of the teeth;
j) a clearance face (34) is ground by rotating the cutter about the axis (C);
k) the cutter is rotated through a determined angle about its longitudinal axis (A), depending on the number of cutter teeth to be made; and
l) stages j) and k) are repeated for all of the teeth.

10. A method of manufacturing the active portion of a spherically-ended copying cutter according to claim 9, characterized in that it includes additional stages m) of rotating the cutter about its longitudinal axis (A), and n) of grinding a second facet (33) of the additional clearance face, said stages being implemented between above stages g) and h).

11. A method of manufacturing the active portion of a spherically ended copying cutter according to claim 9 or claim 10, characterized in that the grinding stages d), g), j), and n) include a step of plunging the grinding tool into the cutter to be machined, the machining step proper during which the cutter is rotated, and a step of withdrawing the grinding tool and of returning it to its starting position.

**Patentansprüche**

1. Kopierfräser mit einem zylindrischen oder konischen Körper, der ein kugelförmiges Ende besitzt, das den aktiven Teil (3) des Fräsers bildet und mehrere Nuten (30) aufweist, die bezüglich der Längsachse des Fräsers um einen bestimmten Winkel ($\theta$) geneigt sind, wobei eine Innen- und eine Außenseite jeder der Nuten nach Bearbeitung eine Spanfläche (31) beziehungsweise Freiflächen (32, 33, 34) jedes Zahns des Fräsers bilden, dadurch gekennzeichnet, daß die Nuten in Form eines Kreisbogens in einem bestimmten Abstand (x) zur Mittelebene (P) des Fräsers ausgeführt sind.

2. Kopierfräser nach Anspruch 1, dadurch gekennzeichnet, daß die Freiflächen eine erste Freifläche (34) und eine Hinterschneidungsfläche mit mindestens einer ersten Fase (32) aufweisen.

3. Kopierfräser nach Anspruch 1 oder 2, dadurch gekennzeichnet, daß die Spanfläche einen durch die folgende Gleichung gegebenen Schnittwinkel $\gamma$ aufweist:

$$\gamma = Arc\sin[x\tan\theta/\sqrt{x(2R-x)}],$$

wobei R der Radius des Fräsers ist.

4. Kopierfräser nach Anspruch 1, dadurch gekennzeichnet, daß sich die Nuten auf einem Bogen von

7

90 bis 120° erstrecken.

5. Kopierfräser nach Anspruch 1, dadurch gekennzeichnet, daß er 6 bis 12 Zähne aufweist, die zu seinem Zentrum hin konvergieren.

6. Kopierfräser nach Anspruch 5, dadurch gekennzeichnet, daß sich bei einer ungeraden Anzahl von Zähnen nur einer (40) davon bis zur Längsrotationsachse des Fräsers erstreckt.

7. Kopierfräser nach Anspruch 1, dadurch gekennzeichnet, daß das kugelförmige Ende einen Kegelschaft (7) für das Zusammenwirken mit einem entsprechenden konischen Gegenstück (80) des zylindrischen Körpers aufweist, wobei eine Haltevorrichtung (9) sowohl den Körper als auch den Kegelschaft durchdringt, um jegliche Rotation zwischen diesen beiden Elementen zu verhindern.

8. Kopierfräser nach Anspruch 7, dadurch gekennzeichnet, daß die Haltevorrichtung durch einen Kerbstift verwirklicht ist.

9. Verfahren zur Herstellung eines Kopierfräsers nach einem der Ansprüche 1 bis 6, dadurch gekennzeichnet, daß es bei geneigter Längsachse (A) des Fräsers um einen bestimmten Winkel (θ) bezüglich der Horizontalen die folgenden Bearbeitungsschritte aufweist, die an einem Teil ausgeführt werden, das aus einem kugelförmigen Kopf (3) und einem Kegelschaft (7) geformt ist:

a) Herstellen einer Nut (30) einer bestimmten Tiefe auf einem bestimmten Abschnitt des kugelförmigen Kopfes durch Rotation des Fräsers um eine zur Horizontalebene senkrechte Achse (C), die in der Nähe des Zentrums des kugelförmigen Kopfes verläuft,
b) Rotation des Fräsers um seine Längsachse (A) um einen vorbestimmten Winkel in Abhängigkeit von der Anzahl der Zähne des Fräsers,
c) Wiederholung der Schritte a) und b) für alle Zähne,
d) Schleifen der Spanfläche auf eine bestimmte Tiefe einer Innenfläche (31) der Nut durch Rotation des Fräsers um die Achse (C), wobei der Schnittwinkel (γ) mit einem vorbestimmten Abstand (x) zur Mittelebene (P) des Fräsers variiert, die durch sein Zentrum und die Ebene des Schleifwerkzeugs (1) verläuft,
e) Rotation des Fräsers um seine Längsachse (A) um einen bestimmten Winkel in Abhängigkeit von der Anzahl der Zähne des Fräsers,
f) Wiederholung der Schritte d) und e) für alle Zähne,
g) Schleifen einer ersten Fase (32) einer Hinterschneidungsfläche durch Rotation des Fräsers um die Achse (C),
h) Rotation des Fräsers um seine Längsachse (A) um einen bestimmten Winkel in Abhängigkeit von der Anzahl der Zähne des Fräsers,
i) Wiederholung der Schritte g) und h) für alle Zähne,
j) Schleifen einer Freifläche (34) durch Rotation des Fräsers um die Achse (C),
k) Rotation des Fräsers um seine Längsachse (A) um einen bestimmten Winkel in Abhängigkeit von der Anzahl der Zähne des Fräsers,
l) Wiederholung der Schritte j) und k) für alle Zähne.

10. Verfahren zur Herstellung des aktiven Teils eines Kopierfräsers mit kugelförmigem Ende nach Anspruch 9, dadurch gekennzeichnet, daß es die zusätzlichen Schritte

m) Rotation des Fräsers um seine Längsachse (A) und
n) Schleifen einer zweiten Fase (33) der Hinterschneidungsfläche

umfaßt, wobei diese Schritte zwischen den vorhergehenden Schritten g) und h) ausgeführt werden.

11. Verfahren zur Herstellung des aktiven Teils eines Kopierfräsers mit kugelförmigem Ende nach Anspruch 9 oder 10, dadurch gekennzeichnet, daß die Schritte des Schleifens d), g), j) und n) einen Schritt des Einstechens des Schleifwerkzeugs in den zu bearbeitenden Fräser, den eigentlichen Schritt der Bearbeitung durch Rotation des Fräsers und einen Schritt des Zurückziehens und der Zurückbewegung des Schleifwerkzeugs in seine Ausgangsstellung aufweisen.

FIG_1

## FIG_2

## FIG_3

FIG_4 a

FIG_4 b

FIG_4 c

FIG_5

FIG_6

FIG_7

FIG_8

FIG_9

FIG 10

FIG_11_1

FIG_11_2